# EUROPÄISCHE PATENTANMELDUNG

(11) **EP 2 048 598 A2**
(43) Veröffentlichungstag der Anmeldung: **15.04.2009**
(21) Anmeldenummer: 08450157.6
(22) Anmeldetag: 13.10.2008
(51) Int. Cl.: G06K 9/00, G01M 19/00

(54) **Verfahren zur Aufbereitung und Bereiningung von Rohdatensätzen**

(30) Priorität: 12.10.2007 AT 16412007
(71) Anmelder: Österreichisches Forschungs Und Prüfzentrum Arsenal Gesselshaft m.b.H, 1210 Wien (AT)
(72) Erfinder: Toplak, Werner, Dipl.-Ing. Dr., 4690 Oberndorf/Schwanenstadt (DE)
(74) Vertreter: Wildhack & Jellinek

(57) **Zusammenfassung**

Die Erfindung betrifft ein Verfahren zur Aufbereitung und Bereinigung von Rohdatensätzen, welche aus mindestens einem diskretisierten bzw. Abtastwerte umfassenden, insbesondere zeitlichen, Signal (O) ermittelt werden.

Erfindungsgemäß ist vorgesehen,
- dass aus dem vorliegenden Signal (O) Sequenzen (S) von Signalwerten ermittelt, gebildet bzw. entnommen werden, welche eine festgelegte Anzahl (F) aus dem Signal (O) entnommener Werte umfassen,
- dass auf eine vorgegebene Anzahl von Sequenzen (S), Indikatorfunktionen (I) angewendet werden und die resultierenden Indikatorfunktionswerte (I(S)) den einzelnen Sequenzen (S) zugeordnet werden,
- dass die Indikatortunktionswerte (I(S)) einer Klassifikation (K) nach mehreren Klassen (L) unterzogen werden,
- dass basierend auf der Klassifikation(K), ein Histogramm (H) erstellt wird,
- dass Sequenzen (S) aus derselben Klasse (L) bezüglich einer lndikatorfunktion (I) markiert werden, eine eine Grenze (G) übersteigende Anzahl (N-G) von Sequenzen (S) markiert wird, und
- dass diejenigen Sequenzen (S) gelöscht werden, welche bezüglich einer oder mehrerer Indikatorfunktionen (I) markiert sind.

## Beschreibung

Die Erfindung betrifft ein Verfahren gemäß dem Oberbegriff des Anspruches 1 sowie einen Datenträger gemäß dem Oberbegriff des Anspruchs 15.

Derartige Verfahren, Datenträger sowie Vorrichtungen werden unter anderen auf dem Gebiet der digitalen Verkehrsüberwachung sowie der Überwachung von Eigenschwingungen in Gegenständen, insbesondere Bauwerken oder Maschinen, eingesetzt.

Generell werden zur Detektion von kritischen Betriebszuständen innerhalb von mechanischen Systemen sowie kritischer Verkehrszustände im Bereich von Verkehrsleitsystemen Überwachungseinrichtungen eingesetzt, welche den zeitlichen Verlauf des entsprechenden Zustandes über eine längere Zeit hinweg verfolgen. Anschließend werden die ermittelten Daten Systemen bzw. Algorithmen mit künstlicher Intelligenz, beispielsweise neuronalen Netzen, oder multivariaten statistischen Verfahren zugeführt, wodurch Vorhersagen über den zukünftigen Betriebszustand, insbesondere über kritische Zustände, getroffen werden können.

Um eine Vorrichtung, umfassend ein System zur Durchführung eines eingangs genannten Algorithmus zur Vorhersage von Daten, wirkungsvoll betreiben zu können, ist eine vorangegangene Einstellung oder Konfiguration des entsprechenden Systems (auch Training genannt) mittels entsprechender, aus Signalen entnommener Sequenzen anzuwenden.

Jedoch besteht hier das Problem, dass für das Training der entsprechenden Algorithmen ein Ungleichgewicht in den ermittelten Testsignalen zu Ungunsten der seltenen kritischen Zustände oder Ereignisse besteht. Während fast permanent unkritische Zustände (z.B. freier Verkehr, Routinebetrieb der Maschine oder Normalbelastung eines Gebäudes) vorliegen, treten kritische Zustände (z.B. Stau, Motorschaden oder Einsturzgefahr) vergleichsweise sehr selten auf. Entsprechend verhält es sich mit den aufgezeichneten Daten, wobei für den kritischen Systemzustand wesentlich weniger Daten vorliegen als für den unkritischen Zustand. Dies wirkt sich nachteilig auf das Training des entsprechenden Systems aus, wobei es im schlimmsten Fall zu Defekten, verursacht durch Unterdeckung mit kritischen Datensequenzen, kommen kann.

Die Aufgabe der Erfindung liegt darin, eine optimale Zusammensetzung von Trainingsdaten zu ermitteln, die in weitere Folge als Grundlage für verschiedene Algorithmen zur Prognose von Zeitreihen dienen und die eingangs genannten Probleme zu lösen.

Die Aufgabe wird erfindungsgemäß durch ein Verfahren mit den Merkmalen des Anspruchs 1, einen Datenträger mit den Merkmalen des Anspruches 18 sowie eine Vorrichtung mit den Merkmalen des Anspruches 19 gelöst.

Die erfindungsgemäße Lösung hat den Vorteil, dass die Anzahl der entsprechenden Sequenzen, welche für das anschließende Training des Algorithmus zu verwenden sind, deutlich reduziert wird, was eine Zeit- und Rechenleistungsersparnis bewirkt. Zudem wird die Prognosequalität gesteigert, da unterschiedliche Systemzustände abgedeckt sind, wodurch die Glaubwürdigkeit der Resultate des Prognoseverfahrens erhöht wird. Daneben kann eine Anpassung des entsprechenden Prognoseverfahrens auf Grund der drastisch reduzierten Datenmengen im Betrieb des entsprechenden Systems gleichzeitig mit dem regulären Betrieb erfolgen.

Gemäß den Ansprüchen 2 und 3 besteht der Vorteil, dass der Lernprozess des Prognoseverfahrens vereinfacht wird und Fehler vermieden werden.

Anspruch 4 ermöglicht eine besonders einfache und effiziente Auswertung der Daten über besonders geeignete Indikatorfunktionen.

Anspruch 5 vereinfacht die Datenverarbeitung und Implementierung des Verfahrens.

Gemäß Anspruch 6 wird auf einfache und effiziente Weise eine Klassifikation für die anschließende Histogrammbildung erreicht.

Gemäß Anspruch 7 wird erreicht, dass eine Klassifikation in Bezug auf drei unterschiedliche Indikatorfunktionen vorgenommen wird, was die fälschliche Markierung oder Löschung von seltenen und folglich relevanten Sequenzen vermeidet.

Anspruch 8 gibt ein einfaches Verfahren zur Markierung von überflüssigen Sequenzen.

Ein Verfahren gemäß dem Anspruch 9 oder 10 legt ein einfaches und leicht zu implementierendes Verfahren zur Löschung von Sequenzen fest.

Gemäß Anspruch 11 kann die Anzahl der zu löschenden Daten eingestellt oder vorgegeben werden und somit der entsprechende Trainingsaufwand für die Kalibrierung des Prognoseverfahrens vorgegeben werden.

Ein Verfahren gemäß den Ansprüchen 12 bis 14 ist besonders vorteilhaft bei der Anwendung auf verkehrsabhängige Größen, um eine optimale Auswahl von Trainingssequenzen für die Vorhersage von Verkehrsdaten zu gewährleisten.

Mit einem Datenträger gemäß Anspruch 15 kann das entsprechende Verfahren auf einer Rechenanlage einfach durchgeführt werden.
Fig. 1 zeigt das ursprüngliche Zeitsignal, aus dem die Sequenzen entnommen werden.
Fig. 2 zeigt schematisch das Ermitteln einzelner Sequenzen aus dem ursprünglichen Signal.
Fig. 3 zeigt eine Liste umfassend die einzelnen Sequenzen sowie die zugeordneten Indikatorfunktionswerte bezüglich einzelner Indikatorfunktionen.
Fig. 4 zeigt schematisch die Zuordnung der Sequenzen in ein Histogramm bezüglich der Varianz.
Fig. 5 zeigt schematisch ein Histogramm mit Sequenzen, welche in bezüglich zweier Indikatorfunktionen klassifiziert sind.
Fig. 6 zeigt das Markieren einzelner Sequenzen mittels eines Zufallsgenerators.
Fig. 7 zeigt eine Liste der einzelnen Sequenzen, dazugehörige Indikatorwerte, Markierungen bezüglich dieser Indikatorwerte sowie die Information, ob die jeweilige Sequenz bezüglich eines zweier vorgegebener Löschungskriterien zu löschen ist.

Ausgangspunkt des Verfahrens ist das Vorliegen eines oder mehrerer Signale O. Im folgenden Ausführungsbeispiel liegt ein einziges zeitliches Signal O vor, wobei für die einzelnen Zeitpunkte t₁, ..., tₙ jeweils ein diskreter Wert vorliegt. Das zeitliche Signal O bildet eine Zuordnung zwischen den einzelnen Zeitpunkten t₁, ..., tₙ zu den an den entsprechenden Zeitpunkten t₁, ..., tₙ aufgenommenen Signalwerten. Diese Werte können insbesondere Geschwindigkeits- bzw. Häufigkeitsmessdaten von Fahrzeugen sein, welche sich auf einem vorgegebenen Streckenabschnitt zu dem entsprechenden Zeitpunkt tᵢ befinden bzw. das zeitdiskrete Signal O, welches von einem, insbesondere starr mit der Maschine oder einem Gebäude verbundenen, Beschleunigungssensor ermittelt wird, welcher Vibrationen an einer Maschine misst. Die Bestimmung eines Signals ist jedoch nicht an diese aufgezählten Beispiele gebunden. Vielmehr können aus jedem beliebigen Eingangssignal mittels des erfindungsgemäßen Verfahrens relevante Sequenzen ermittelt werden.

Die Signale oder auch einzelne Sequenzen können gegebenenfalls normiert werden, wobei jener Wert mit dem größten Absolutbetrag je nach seinem Vorzeichen entweder +1 oder -1 zugeordnet wird und die übrigen Werte linear skaliert werden.

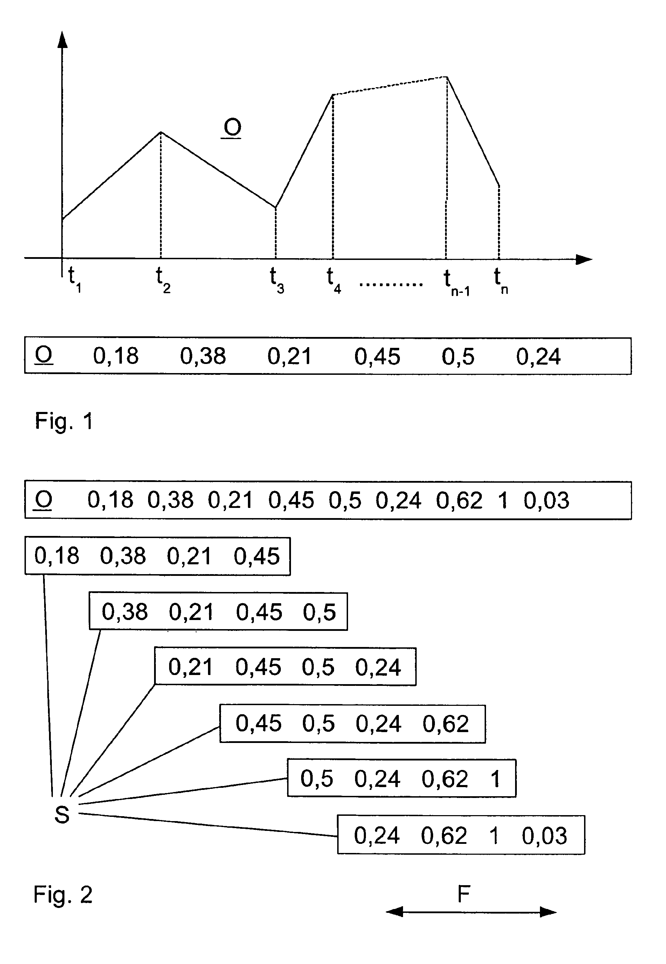

Fig. 2 zeigt die Bildung einzelner Sequenzen S aus dem zeitlichen Signal O. Die Sequenzen umfassen eine festgelegte Anzahl F aus dem Signal O unmittelbar aufeinanderfolgender entnommener Werte, wobei in diesem Beispiel jeder Zeitpunkt tᵢ als Startpunkt einer Sequenz S festgelegt wird. Die resultierenden Sequenzen S₁, ..., Sₙ werden gegebenenfalls in einem getrennten Speicher M abgelegt, wobei dieser Speicher M auch weitere Speicherplätze zum Ablegen von Indikatorfunktionswerten I(S) und Markierungen umfassen kann.

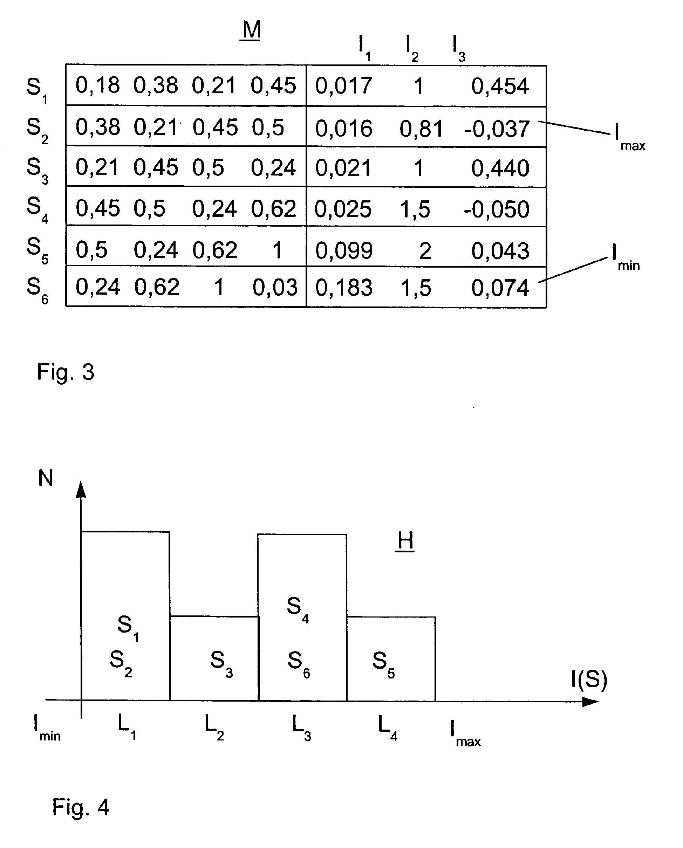

Gemäß Fig. 3 werden die Varianz σ² die Entropie E und der Lyapunov Exponent LE als Indikatorfunktionen I auf die entsprechenden Sequenzen S angewendet. Für die resultierenden Indikatorfunktionswerte I(S), welche durch die Anwendung der jeweiligen Indikatorfunktionen I auf die einzelnen Sequenzen S gebildet werden, ist jeweils ein separater Speicherplatz vorgesehen, wobei die Indikatorfunktionswerte I(S) den einzelnen Sequenzen S zugeordnet sind. Bezüglich der Varianz σ² sind der minimale und der maximale Indikatorfunktionswert Iₘᵢₙ und Iₘₐₓ dargestellt.

In Fig. 4 ist auf der Abszisse eine Klassifikation K des Indikatorfunktionswertes I(S), welcher in diesem Fall der Varianz σ² der entsprechenden Sequenz S entspricht, dargestellt. Im vorliegenden Fall werden das Minimum Iₘᵢₙ und das Maximum Iₘₐₓ der Indikatorfunktionswerte I(S) der einzelnen Sequenzen S herangezogen und der Bereich zwischen diesen in eine Anzahl P von Klassen L unterteilt. Die einzelnen Sequenzen S werden nun jener Klasse L zugeordnet, in welche ihr Indikatorfunktionswert I(S) fällt. Aufgrund der Tatsache, dass das Minimum Iₘᵢₙ bzw. das Maximum Iₘₐₓ der Indikatorfunktionswerte I(S) als äußere Schranken für die Klassifikation K herangezogen werden, weisen die erste sowie die letzte Klasse L stets zumindest ein Element auf. Üblich ist hierbei eine Unterteilung in gleich breite Klassen L, wobei die Anzahl P der Klassen frei vorgegeben werden kann. Es ist jedoch zu beachten, dass bei einer Erhöhung der Anzahl P von Klassen L die Wahrscheinlichkeit zunimmt, dass einzelne Klassen L keine Sequenzen S enthalten. Im vorliegenden Fall fallen die Sequenzen S₁ und S₂ in die Klasse L₁, die Sequenz S₃ fällt in die Klasse L₂, die Sequenzen S₄ und S₆ fallen in die Klasse L₃ und die Sequenz S₅ fällt in die Klasse L₄. Bei einer derartigen Klassifikation K mittels Intervallen, eventuell bei gegebener Intervallbreite B, ist eine eindeutige Zuordnung der Sequenzen S zu genau einer Klasse L möglich und durchführbar. Für die Einordnung in eine Klasse L ist es erforderlich, den entsprechenden Indikatorfunktionswert I(S) einer Sequenz S mit den beiden Intervallgrenzen der entsprechenden Klasse L zu vergleichen, um so festzustellen, ob diese Sequenz S innerhalb der jeweiligen Klasse L liegt. Durch die Klassifikation K kann somit ein Histogramm H gebildet werden, welches bezüglich jeder Klasse L die entsprechende Anzahl N von Sequenzen S an der Ordinate darstellt, welche innerhalb der jeweiligen Klasse L liegen.

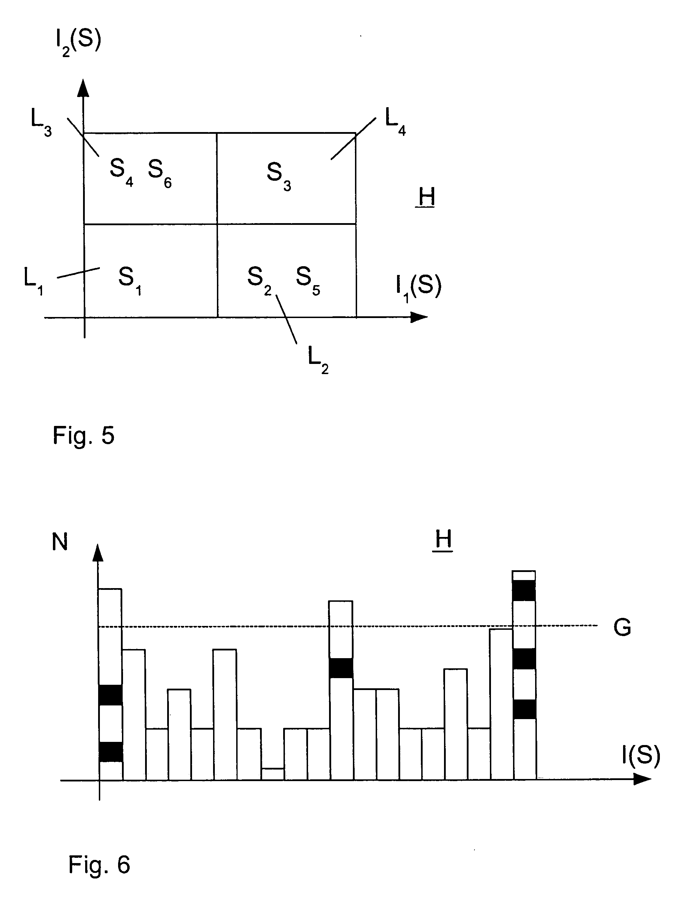

Fig. 5 zeigt schematisch den Fall eines bezüglich zweier Indikatorfunktionen I₁, I₂ gebildeten Histogramms H. Hierbei wird zunächst bezüglich jeder einzelnen Indikatorfunktion I eine Klassifikation K analog zu Fig. 4 vorgenommen. Zwei Sequenzen S₁, S₂ sind genau dann derselben Klasse L zuzuordnen, wenn bezüglich jeder der Indikatorfunktionen I₁, I₂ die entsprechenden Indikatorfunktionswerte I(S) der beiden Sequenzen S₁, S₂ jeweils derselben Klasse L zugeordnet werden können. Selbstverständlich lässt sich diese Vorgehensweise, welche in Fig. 5 für zwei unterschiedliche Indikatorfunktionswerte I₁, I₂ durchgeführt ist, auch auf eine Vielzahl von unterschiedlichen Indikatorfunktionen I₁, ..., Iₙ anwenden.

Fig. 6 zeigt schematisch das Markieren einzelner Indikatorfunktionen I. Zu diesem Zweck wird eine obere Grenze G für die Anzahl N von Sequenzen S derselben Klasse L vorgegeben. Diese Vorgabe kann willkürlich getroffen werden, insbesondere spielen bei der Festlegung dieser Grenze G die Anzahl M der endgültig zu löschenden Sequenzen S eine wesentliche Rolle. Je niedriger diese Grenze G gewählt wird, desto weniger Sequenzen S sind anschließend als Resultat des Verfahrens übrig und desto mehr Sequenzen S werden gelöscht. Beim Markieren der Sequenzen S wird so vorgegangen, dass wenn die Anzahl N der Sequenzen S innerhalb einer Klasse L kleiner ist als die vorgegebene Grenze G, keine der entsprechenden Sequenzen S bezüglich der entsprechenden Indikatorfunktion markiert wird. Dies ist bei den Klassen L₁ und L₄ der Fall. Bei den übrigen Klassen gibt es stets eine die Grenze G übersteigende Anzahl N-G von Sequenzen S. Mittels eines Zufallsgenerators R wird aus der Gesamtzahl der Sequenzen S innerhalb einer Klasse L eine die Grenze G übersteigende Anzahl N-G von Sequenzen S ausgewählt und markiert.

Neben dieser zufallsbasierten Vorgehensweise gibt es selbstverständlich auch die Möglichkeit, die ersten bzw. die letzten N-G Sequenzen zu markieren, wobei die Reihenfolge der Sequenzen S beispielsweise aus der Reihenfolge der Sequenzen S im Speicher M herangezogen werden kann.

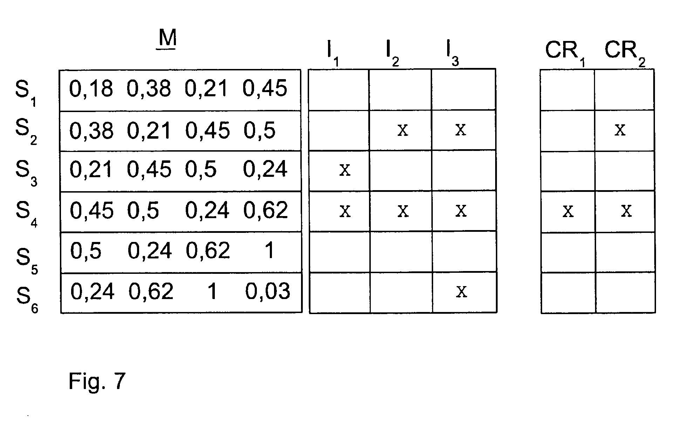

In Fig. 7 wird das Löschen einzelner Sequenzen S dargestellt. Hierbei kommt es lediglich auf die Markierungen der einzelnen Sequenzen S an. Eine einfache Vorgehensweise zum Löschen der Sequenzen S besteht darin, eine Sequenz S genau dann zu löschen, wenn diese bezüglich aller Indikatorfunktionen I nicht markiert ist. Eine weitere Möglichkeit besteht darin, dass eine Sequenz S dann gelöscht wird, wenn die gegebenenfalls gewichtete Summe von Markierungen bezüglich unterschiedlicher Indikatorfunktionen I einen festgelegten Schwellwert Z überschreitet. Bei der Wahl des Schwellenwertes Z, der Grenze G sowie der Aufteilung in entsprechende Klassen L bezüglich der Indikatorfunktionen I ist darauf zu achten, dass eine vorgegebene Anzahl M von Sequenzen S nach entsprechender Markierung gelöscht wird. Selbstverständlich kann aufgrund der zufälligen Markierung, welche sowohl durch den Zufallsgenerator als auch durch die zufällige Einordnung der Sequenzen S in den Speicher M erfolgt, die genaue Anzahl der zu löschenden Sequenzen S nicht exakt angegeben werden. Handelt es sich jedoch um eine sehr große Anzahl von insgesamt gebildeten Sequenzen S, so kann auch bei einer relativ feinen Unterteilung in Klassen L durch Einstellung der Grenze G, der Intervallbreite B und eventuell des Schwellenwerts Z die Anzahl M der zu löschenden Sequenzen S relativ genau eingestellt werden.
Bei einem Referenzzeitintervall von 26 Wochen ist bei der ermittelten Menge an Verkehrsdaten eine Löschung von bis zu 95% der aufgenommenen Datensequenzen möglich.

Ein bevorzugter Anwendungsbereich des beschriebenen Verfahrens ist die Bestimmung und Vorhersage von verkehrsabhängigen Größen, welche den zeitlichen Verlauf einer lokalen, auf einem einzigen vorgegebenen Streckenabschnitt oder einer einzigen Stelle gemessenen und ermittelten Wert, beispielsweise die durchschnittliche Geschwindigkeit der Fahrzeuge bzw. die Anzahl der Fahrzeuge innerhalb eines bestimmten zeitlichen Intervalls, wiedergibt.

Diese zeitlichen Abstände zwischen den Diskretisierungszeitpunkten t₁, ..., tₙ des Signals O sind üblicherweise konstant und liegen im Minutenbereich, insbesondere im Bereich zwischen einer und dreißig Minuten, vorzugsweise bei 5, 10, 15 oder 30 Minuten. Eine Sequenz S enthält demgemäß eine Anzahl von 3 bis 12 Werten und umfasst einen Zeitbereich von etwa 15 Minuten bis 6 Stunden.
Analog kann das erfindungsgemäße Verfahren ebenfalls zur Aufnahme eines Schwingungssignals oder Vibrationssignals einer Maschine verwendet werden, wobei in diesem Fall das Signal O mittels eines Beschleunigungssensors ermittelt wird, welcher starr mit der zu überwachenden Maschine verbunden ist. In diesem Fall liegt das entsprechende Zeitintervall zur Messung der einzelnen Signalwerte im Bereich von Millisekunden, abhängig von der Schwingungsfrequenz der Maschine im Normalbetrieb. Aus dem Signal O wird eine festgelegte Anzahl F aufeinanderfolgende Werte entnommen und daraus eine Sequenz S gebildet.

Hierbei kann vorgesehen werden, dass das Signal (O) den zeitlichen Verlauf eines mittels eines Beschleunigungssensors ermittelten Schwingungssignals oder Vibrationssignals eines Vibrationen, Schwingungen bzw. Schlägen unterworfenen Gegenstands, beispielsweise einer Maschine, wiedergibt, wobei der Beschleunigungssensor starr mit dem Gegenstand, insbesondere der Maschine, verbunden ist.

Insbesondere vorteilhaft ist, dass das Zeitintervall (Δt) im Bereich von Millisekunden liegt, insbesondere im Bereich zwischen 1 bis 100 Millisekunden.

Weiters ist vorteilhaft, dass die festgelegte Anzahl (F) aufeinanderfolgender Werte des diskretisierten Signals (O) zur Bildung einer Sequenz (S) im Bereich zwischen 5 und 100 liegt oder die Sequenz (S) einen Zeitbereich von 10 Millisekunden bis 5 Sekunden umfasst.

Für eine Schweißnaht-Prüfung können der Verlauf elektrischer Größen wie Strom und Spannung als zu verarbeitende Eingangssignale verwendet werden. Die Messungen sind jeweils an die relevanten Zeitintervalle angepasst, in diesem Fall sind die Abtastintervalle im Bereich von einigen Mikrosekunden, die Länge der Sequenzen ist etwa im Bereich von 3 bis 20.

In diesem Fall kann vorgesehen werden, dass das Signal (O) den zeitlichen Verlauf eines mittels eines Spannungs- oder Strommessgeräts ermittelten Signals wiedergibt, welches Messgerät die entsprechende elektrische Kenngröße bei einem Schweißvorgang aufzeichnet.

Insbesondere vorteilhaft ist, dass das Zeitintervall (Δt) im Bereich von Mikrosekunden liegt, insbesondere im Bereich zwischen 1 bis 100 Mikrosekunden.

Weiters ist vorteilhaft, dass die festgelegte Anzahl (F) aufeinanderfolgender Werte des diskretisierten Signals (O) zur Bildung einer Sequenz (S) im Bereich zwischen 5 und 100 liegt oder die Sequenz (S) einen Zeitbereich von 10 Mikrosekunden bis 5 Millisekunden umfasst.

Je nach Anwendung können selbstverständlich unterschiedliche Daten in unterschiedlichen Zeitintervallen aufgenommen werden, wobei die maximale Länge der einzelnen Sequenzen bei etwa 50 liegt. Die Abtastintervalle sind dabei an die relevanten transienten Phänomene mit Methoden nach dem Stand der Technik, wie beispielsweise dem Abtasttheorem, anzupassen.

Ein Programm zur Durchführung des erfindungsgemäßen Verfahrens ist auf einem Datenträger gespeichert.
Entsprechend der Erfindung werden technisch orientierte Sequenzen aus einem diskretisierten Signal ermittelt und die Anzahl der Sequenzen wird reduziert, wodurch ein folgendes technisches Auswerte-Verfahren schneller durchgeführt werden kann.
Zu Beginn des Verfahrens steht eine physikalische Messgröße. Die Diskretisierung ist typisch für physikalische Signale, welche mittels eines Messgeräts aufgezeichnet worden sind. Das erfindungsgemäße Verfahren richtet sich auf die Manipulation (Reduktion) von messbaren physikalischen Werten und zielt auf die Vereinfachung der Vorhersage von nachfolgenden Messwerten basierend auf bereits aufgezeichneten Messwerten. Derartige Messgrößen sind z.B. Verkehrsgrößen, Temperaturwerte, Wetterdaten, Schwingungsgrößen, wie beispielsweise bei Werkzeugmaschinen, seismische Größen oder generell Daten an deren Vorhersage Interesse besteht.

Das erfindungsgemäße Verfahren kann bei Zugrundelegung, beispielsweise von Verkehrsdaten, als ein Teil eines Regelkreises, beispielsweise zur Regelung des Verkehrs, angesehen werden, wobei die ermittelten Ausgangsdaten zur Regelung herangezogen werden.
Wesentlich ist, dass eine Anzahl von Sequenzen reduziert wird. Damit werden aus den Messsignalen jene Sequenzen ausgewählt, welche zur Darstellung des Signals eine erhöhte Relevanz aufweisen. Eine Wiederholung von sehr ähnlichen Sequenzen wird vermieden und Speicherplatz wird eingespart. Ferner werden an die Problemstellung angepasste Vergleichskriterien geoffenbart, welche die Auswahl von Sequenzen effizient ermöglichen. Nicht alle Messwerte, mit denen ursprünglich die Sequenzen gebildet wurden, müssten ausgewertet werden, sondern es wird das Auslangen mit wesentlich weniger Messwerten gefunden. Die Erfindung verringert somit den zur Abspeicherung der Signale bzw. Sequenzen benötigten Speicherplatz und verbessert auch die Performance eines nachgeschalteten Verfahrens, welches die generierten Sequenzen weiterverarbeitet.

Bei der Verwendung eines neuronalen Netzes als nachgeschaltete Einheit wird der Effekt des Übertrainierens vermieden. Dieser Effekt tritt kaum ein, wenn eine zu große Anzahl von gleichartigen Eingangsdaten zu Trainingszwecken dem neuronalen Netz zugeführt werden. Dazu war die Überlegung notwendig, unter diesen Voraussetzungen die Anzahl der Sequenzen zu reduzieren und die Anzahl von häufig auftretenden Sequenzen im Verhältnis zur Anzahl der selten auftretenden Sequenzen zu verringern. Es wird eine Menge von diskreten zeitlichen Sequenzen geschaffen, welche seltene Ereignisse und häufige Ereignisse in gleichem Maße umfasst.

## Patentansprüche

1. Verfahren zur Aufbereitung und Bereinigung von Rohdatensätzen, welche aus mindestens einem diskretisierten bzw. Abtastwerte umfassenden, insbesondere zeitlichen, Signal (O) ermittelt werden, **dadurch gekennzeichnet,**
- **dass** aus dem vorliegenden Signal (O) Sequenzen (S) von Signalwerten ermittelt, gebildet bzw. entnommen werden, welche eine festgelegte Anzahl (F) aus dem Signal (O) entnommener Werte umfassen,
- **dass** auf eine vorgegebene Anzahl von Sequenzen (S), insbesondere alle ermittelten Sequenzen (S), eine vorgegebene Anzahl derselben, voneinander unterschiedlichen, vorgegebenen Indikatorfunktionen (I) angewendet wird und die resultierenden Indikatorfunktionswerte (I(S)) den einzelnen Sequenzen (S) zugeordnet werden,
- **dass** die Indikatorfunktionswerte (I(S)) einer Klassifikation (K) nach mehreren Klassen (L) unterzogen werden, wobei jeder einzelne Indikatorfunktionswert (I(S)) sowie die entsprechende Sequenz (S) eindeutig einer der Klassen (L) zugeordnet werden,
- **dass** bezüglich der Indikatorfunktionswerte (I(S)) der jeweiligen Sequenzen (S), basierend auf der Klassifikation(K), ein Histogramm (H) ermittelt oder erstellt wird,
- **dass** eine obere Grenze (G) für die Anzahl (N) von Sequenzen (S) innerhalb derselben Klasse (L) festgesetzt wird,
- **dass** Sequenzen (S) aus derselben Klasse (L) bezüglich einer Indikatorfunktion (I) markiert werden, wenn die Anzahl (N) der jeweiligen Sequenzen (S) der entsprechenden Klasse (L) die obere Grenze (G) übersteigt, wobei eine die Grenze (G) übersteigende Anzahl (N-G) von Sequenzen (S) markiert wird, und
- **dass** diejenigen Sequenzen (S) gelöscht, unterdrückt oder entfernt werden, welche bezüglich einer oder mehrerer Indikatorfunktionen (I) markiert sind.

2. Verfahren gemäß Anspruch 1, **dadurch gekennzeichnet, dass** jede der Sequenzen (S) eine festgelegte Anzahl (F) aus dem Signal (O) entnommener und im Signal (O) unmittelbar aufeinanderfolgender Werte umfasst.

3. Verfahren gemäß Anspruch 1, **dadurch gekennzeichnet, dass** das Signal (O) ein Zeitsignal mit konstanten Zeitintervallen (Δt) zwischen den einzelnen aufeinanderfolgenden Diskretisierungszeitpunkten (t₁, ... tₙ) ist.

4. Verfahren gemäß Anspruch 1 oder 2, **dadurch gekennzeichnet, dass** als Indikatorfunktionen (I) die Varianz, die Entropie und/oder der Lyapunov-Exponent auf die entsprechenden Sequenzen (S) angewendet werden.

5. Verfahren gemäß einem der vorangegangenen Ansprüche, **dadurch gekennzeichnet, dass** jede der Sequenzen (S) in einem separaten, vom Speicher für das Signal (O) getrennten Speicher (M) vor der Bildung der Indikatorfunktionswerte (I(S)) abgespeichert wird.

6. Verfahren gemäß einem der vorangegangenen Ansprüche, **dadurch gekennzeichnet, dass** die Klassifikation (K) bezüglich einer einzelnen der angewendeten Indikatorfunktionen (I) **dadurch** erfolgt, dass das Minimum (Iₘᵢₙ) und das Maximum (Iₘₐₓ) der entsprechenden Indikatorfunktionswerte (I(S)) in den einzelnen Sequenzen (S) ermittelt werden, dass eine Anzahl (P) von Klassen (L) vorgegeben wird und dass der Bereich zwischen Minimum (Iₘᵢₙ) und Maximum (Iₘₐₓ) der entsprechenden Indikatorfunktionswerte (I(S)) in diese Anzahl (P) von Klassen (L) unterteilt wird.

7. Verfahren gemäß einem der vorangegangenen Ansprüche, **dadurch gekennzeichnet, dass** die Klassifikation (K) bezüglich mehrerer Indikatorfunktionen (I) vorgenommen wird, wobei bezüglich jeder einzelnen Indikatorfunktion (I) eine Klassifikation (K) vorgenommen wird, und
- dass zwei Sequenzen (S) genau dann derselben Klasse (L) zugeordnet werden, wenn bezüglich jeder der Indikatorfunktionen (I) die entsprechenden Indikatorfunktionswerte (I(S)) der beiden Sequenzen (S) der jeweils selben Klasse (L) zugeordnet sind.

8. Verfahren gemäß einem der vorangegangenen Ansprüche, **dadurch gekennzeichnet, dass** bei Vorhandensein einer Anzahl (N) von Sequenzen (S) innerhalb derselben Klasse (L), welche Anzahl (N) größer ist als eine festgelegte Grenze (G), eine die Grenze (G) übersteigende Anzahl (N-G) von Sequenzen (S) mittels eines Zufallsgenerators (R) markiert wird.

9. Verfahren gemäß einer der vorangegangenen Ansprüche, **dadurch gekennzeichnet, dass** eine Sequenz (S) gelöscht wird, wenn die, gegebenenfalls gewichtete, Summe von Markierungen einen festgelegten Schwellenwert (Z) überschreitet.

10. Verfahren gemäß der vorangegangenen Ansprüche, **dadurch gekennzeichnet, dass** Sequenzen (S) gelöscht werden wenn sie bezüglich aller Indikatorfunktionen (I) markiert sind.

11. Verfahren gemäß der vorangegangenen Ansprüche, **dadurch gekennzeichnet, dass** die Grenze (G), gegebenenfalls der Schwellwert (Z), sowie die Aufteilung in eine entsprechende Anzahl von Klassen (L) bezüglich der einzelnen Indikatorfunktion (I), insbesondere durch Vorgabe einer für alle Klassen gleichen Intervallbreite (B), so gewählt wird, dass eine vorgegebene Anzahl (M) von Sequenzen (S), vorzugsweise 75% bis 95%, nach entsprechender Markierung gelöscht wird.

12. Verfahren gemäß einem der vorangegangenen Ansprüche, **dadurch gekennzeichnet, dass** das Signal (O) den zeitlichen Verlauf einer lokalen, auf einem einzigen vorgegebenen Streckenabschnitt oder an einer einzigen Stelle gemessenen oder ermittelten, verkehrsabhängigen Größe, beispielsweise der durchschnittlichen Geschwindigkeit der Fahrzeuge bzw. der Anzahl der Fahrzeuge, innerhalb eines bestimmten zeitlichen Intervalls wiedergibt.

13. Verfahren gemäß Anspruch 12, **dadurch gekennzeichnet, dass** das Zeitintervall (Δt) im Minutenbereich liegt, insbesondere im Bereich zwischen 1 bis 30 Minuten, vorzugsweise 5, 10, 15 oder 30 Minuten.

14. Verfahren gemäß Anspruch 12 oder 13, **dadurch gekennzeichnet, dass** die festgelegte Anzahl (F) von diskreten Werten, welche zur Bildung einer Sequenz (S) aus dem Signal (O) entnommen wird, im Bereich zwischen 3 und 12 liegt oder die Sequenz (S) einen Zeitbereich von 15 Minuten bis 6 Stunden umfasst.

15. Datenträger, **dadurch gekennzeichnet, dass** auf ihm ein Programm zur Ausführung des in den Ansprüchen 1 bis 14 beanspruchten Verfahrens gespeichert ist.
